(19) Europäisches Patentamt / European Patent Office / Office européen des brevets

(11) **EP 4 503 173 A1**

(12) **EUROPEAN PATENT APPLICATION**
published in accordance with Art. 153(4) EPC

(43) Date of publication:
**05.02.2025 Bulletin 2025/06**

(21) Application number: **23790950.2**

(22) Date of filing: **17.03.2023**

(51) International Patent Classification (IPC):
$H01M\ 4/133^{(2010.01)}$ $\quad H01M\ 4/1393^{(2010.01)}$
$H01M\ 10/0525^{(2010.01)}$

(52) Cooperative Patent Classification (CPC):
H01M 4/131; H01M 4/133; H01M 4/1391;
H01M 4/1393; H01M 10/0525; H01M 50/258;
Y02E 60/10

(86) International application number:
**PCT/CN2023/082058**

(87) International publication number:
**WO 2023/202289 (26.10.2023 Gazette 2023/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.04.2022 CN 202210414297**

(71) Applicant: **Contemporary Amperex Technology
(Hong Kong) Limited
Central, Central And Western District (HK)**

(72) Inventors:
• **CHEN, Xiangbin**
 Ningde, Fujian 352100 (CN)
• **QU, Denghong**
 Ningde, Fujian 352100 (CN)
• **GAO, Kai**
 Ningde, Fujian 352100 (CN)
• **LAI, Youlei**
 Ningde, Fujian 352100 (CN)

(74) Representative: **Gong, Jinping
CocreateIP
Neumarkterstr. 21
81673 München (DE)**

(54) **NEGATIVE ELECTRODE PLATE AND PREPARATION METHOD THEREFOR, SECONDARY BATTERY, BATTERY MODULE, BATTERY PACK, AND ELECTRIC DEVICE**

(57) The present application provides a negative electrode plate for a secondary battery, a method for preparing the same, and a secondary battery including the negative electrode plate, a battery module, a battery pack, and an electrical device. The negative electrode plate in the present application includes a current collector and an active material layer disposed on at least one surface of the current collector, wherein the active material layer includes: a first graphite layer disposed on at least one surface of the current collector, a lithium titanate layer disposed on the surface of the first graphite layer, and a second graphite layer disposed on the surface of the lithium titanate layer; and the first graphite layer has an OI value of greater than or equal to 20.0, and the second graphite layer has an OI value of less than or equal to 15.0.

Fig. 1

# EP 4 503 173 A1

**Description**

CROSS-REFERENCE TO RELATED APPLICATION

The present application claims priority to Chinese Patent Application No. 202210414297.0 entitled "NEGATIVE ELECTRODE PLATE, METHOD FOR PREPARING THE SAME, SECONDARY BATTERY, BATTERY MODULE, BATTERY PACK AND ELECTRICAL DEVICE" and filed on April 20, 2022, which is incorporated herein by reference in its entirety.

TECHNICAL FIELD

The present application relates to the technical field of secondary batteries, and more particularly to a negative electrode plate for a secondary battery, a method for preparing the negative electrode plate, and a secondary battery including the negative electrode plate, a battery module, a battery pack, and an electrical device.

BACKGROUND

In recent years, as the application scope of lithium-ion batteries has become more and more extensive, lithium-ion batteries have been widely used in energy storage power systems such as hydraulic, thermal, wind and solar power plants, as well as in many fields such as electric tools, electric bicycles, electric motorcycles, electric vehicles, military equipment, and aerospace. Due to the great development of lithium-ion batteries, higher requirements are put forward for their energy density, cycle performance and safety performance.

In the related art, graphite is generally used as an active material of a negative electrode plate of a lithium-ion secondary battery. However, in the manufacture and use of the lithium-ion secondary battery of the related art, the negative electrode plate has too high the rebound rate, thus the lithium-ion battery has a too large expansion force, so that the separator is squeezed and has a poor wettability in an electrolytic solution, thereby increasing the polarization. As a result, the capacity attenuation of lithium-ion battery is accelerated and the service life is shortened. On the other hand, too high rebound rate of the negative electrode plate will further cause the electrode plate to break at corner, increasing the safety risk of lithium-ion battery.

Therefore, there is an urgent need in the related art for negative electrode plates that have a reduced rebound rate and thus lead to an improved service life and safety performance of lithium-ion batteries.

**SUMMARY**

In view of the problems existing in the related art, an object of the present application is to provide a negative electrode plate with a low rebound rate, thereby improving the service life and safety performance of a lithium-ion battery using the negative electrode plate, and meanwhile ensuring the rate performance of the battery and reducing the capacity attenuation of the battery.

In order to solve the above technical problems, the present application provides the following embodiments. In the first aspect, the present application provides a negative electrode plate including a current collector and an active material layer disposed on at least one surface of the current collector, wherein the active material layer includes:

> a first graphite layer;
> a lithium titanate layer; and
> a second graphite layer,
> the first graphite layer is disposed on at least one surface of the current collector, the lithium titanate layer is disposed on a surface of the first graphite layer, and the second graphite layer is disposed on a surface of the lithium titanate layer.

The first graphite layer has an OI value of greater than or equal to 20.0, optionally from 30.0 to 40.0, and the second graphite layer has an OI value of less than or equal to 15.0, optionally from 8.0 to 12.0.

Therefore, by providing the lithium titanate layer in the active material layer, the rebound of the negative electrode plate due to the volume change in the manufacturing process and the charging and discharging process of battery is effectively reduced, thereby greatly improving the service life and safety performance of the lithium-ion battery. By providing a first graphite layer having a higher OI value between the lithium titanate layer and the current collector layer, the problem of deterioration of rate performance due to too low electronic conductivity of lithium titanate is solved. By providing a second graphite layer having a lower OI value on the surface of the lithium titanate layer, the densification degree of the SEI film on the surface of the active material layer is improved, the consumption of active lithium ions is delayed, thereby reducing the capacity attenuation of the battery.

In some embodiments, the first graphite layer has a thickness of less than or equal to 100 $\mu$m.

As a result, it may ensure that the first graphite layer has an OI value within the above-described specific ranges, and at the same time, adverse influences of graphite on the rebound characteristics of the negative electrode plate due to volume changes during manufacturing and use of the lithium-ion battery are minimized.

In some embodiments, the lithium titanate layer has a thickness of from 25 to 50 $\mu$m.

As a result, the effect of the lithium titanate layer on reducing the rebound of the negative electrode plate can be fully exerted, meanwhile maintaining the rate performance of the lithium-ion battery.

In some embodiments, the second graphite layer has a thickness of less than or equal to 100 $\mu$m.

As a result, it may ensure that the second graphite layer has an OI value within the above-described specific ranges, and at the same time, adverse influences of graphite on the rebound characteristics of the negative electrode plate due to volume changes during manufacturing and use of the lithium-ion battery are minimized.

In some embodiments, the active material layer has a thickness of from 50 to 150 $\mu$m.

As a result, it may ensure that the negative electrode plate has good wettability, on the premise of ensuring the energy density of the negative electrode plate.

In some embodiments, the negative electrode plate has a compacted density of from 0.9 to 1.8 g/cm$^3$.

As a result, the energy density of the lithium-ion battery can be ensured, and at the same time, the rebound rate of the negative electrode plate can be further reduced, thereby ensuring the safety performance, the rate performance, and the cycle performance of the battery.

In the second aspect, the present application provides a method for preparing a negative electrode plate, including:

> providing a current collector;
> forming a first graphite layer including first graphite on at least one surface of the current collector;
> forming a lithium titanate layer including lithium titanate on a surface of the first graphite layer;
> forming a second graphite layer including second graphite on a surface of the lithium titanate layer, to obtain a laminated body having an active material layer on at least one surface of the current collector, the active material layer including the first graphite layer, the lithium titanate layer, and the second graphite layer; and
> cold-pressing the laminated body to obtain the negative electrode plate;
> wherein the first graphite has an OI value of greater than 2.0 and less than or equal to 6.0, optionally from 3.0 to 5.0, and the second graphite has an OI value of greater than or equal to 0.5 and less than 2.0, and optionally from 1.0 to 1.5.

As a result, it may ensure that the first graphite layer and the second graphite layer each have an OI value within the above-described specific ranges after cold-pressing of the negative electrode plate.

In some embodiments, a pressure for cold-pressing is from 15 to 70 T.

As a result, the energy density of the negative electrode plate can be controlled, and meanwhile avoiding the potential safety hazard caused by fragmentation of the particles in the active material layer during the pressing process.

In some embodiments, after cold-pressing the laminated body, the first graphite layer as formed has an OI value of greater than or equal to 20.0, optionally from 30.0 to 40.0, and the second graphite layer as formed has an OI value of less than or equal to 15.0, optionally from 8.0 to 12.0.

As a result, as described above, by ensuring that the first graphite layer and the second graphite layer have an OI value within the above-described specific ranges, the rate performance of the lithium-ion battery to which the negative electrode plate is applied can be sufficiently ensured, meanwhile reducing the capacity attenuation of the lithium-ion battery.

In some embodiments, after cold-pressing the laminated body, the negative electrode plate as formed has a compacted density of from 0.9 to 1.8 g/cm$^3$.

As a result, as described above, by ensuring that the negative electrode plate has a compacted density within the above range, the capacity of the lithium-ion battery to which the negative electrode plate is applied can be sufficiently ensured, meanwhile ensuring the wettability of the electrode plate in the preparation process and the production efficiency of the electrode plate.

In the third aspect, the present application provides a secondary battery, including:

> a positive electrode plate;
> the negative electrode plate according to the first aspect of the present application, or the negative electrode plate prepared according to the method according to the second aspect of the present application;
> an electrolyte; and
> a separator.

As described above, the service life and safety performance of the secondary battery of the present application are improved, while the rate performance is sufficiently ensured and the capacity attenuation is reduced.

In the fourth aspect, the present application provides a battery module, including the secondary battery according to the third aspect of the present application.

In the fifth aspect, the present application provides a battery pack, including the battery module according to the fourth aspect of the present application.

In the sixth aspect, the present application provides an electrical device, including the secondary battery according to the third aspect of the present application, the battery module according to the fourth aspect of the present application, or the battery pack according to the fifth aspect of the present application.

In the negative electrode plate of the present application, by providing an active material layer including the first graphite layer having a specific OI value, the lithium titanate layer and the second graphite layer having a specific OI value on the current collector, the rebound of the negative electrode plate due to the volume change in the manufacturing process and the charging and discharging process of battery can be effectively reduced, thereby improving the service life and safety performance of the lithium-ion battery and meanwhile ensuring the rate performance of the battery and meanwhile reducing the capacity attenuation of the battery.

## DESCRIPTION OF THE DRAWINGS

Fig. 1 is an exemplary schematic diagram of a negative electrode plate having an active material layer on one surface of a current collector according to an embodiment of the present application.

Fig. 2 is a graph showing the trend of the rebound rate of negative electrode plates in Example 1, Control Examples 1 to 2, and Comparative Examples 1 to 2.

Fig. 3a is a graph showing the expansion force of the lithium-ion batteries as a function of the number of cycles in Example 1, Control Examples 1 to 2, and Comparative Examples 1 to 2.

Fig. 3b is a graph showing the capacity retention ratio of the lithium-ion batteries as a function of the number of cycles in Example 1, Control Examples 1 to 2, and Comparative Examples 1 to 2.

Fig. 4a is a graph showing the capacity retention ratio of the lithium-ion batteries as a function of the number of cycles in Example 2 and Comparative Examples 3 to 4.

Fig. 4b is a bar graph showing the rate capacity retention ratio of the lithium-ion batteries in Example 2, and Comparative Examples 3 to 4.

Fig. 5 is a schematic diagram of a secondary battery according to an embodiment of the present application.

Fig. 6 is an exploded diagram of the secondary battery according to an embodiment of the present application as shown in Fig. 5.

Fig. 7 is a schematic diagram of a battery module according to an embodiment of the present application.

Fig. 8 is a schematic diagram of a battery pack according to an embodiment of the present application.

Fig. 9 is an exploded diagram of the battery pack according to an embodiment of the present application as shown in Fig. 8.

Fig. 10 is a schematic diagram of an electrical device comprising the secondary battery according to an embodiment of the present application as a power supply.

Reference numerals are as follows:

1. Battery pack;
2. Upper case body;
3. Lower case body;
4. Battery module;
5. Secondary battery;
51. Housing;
52. Electrode assembly;
53. Top cover assembly.
6. Negative electrode plate
61. Current collector;
60. Active material layer;
62. First graphite layer;
63. Lithium titanate layer; and
64. Second graphite layer.

## DETAILED DESCRIPTION

Hereafter, embodiments of the negative electrode plate for a secondary battery and a method for preparing the same, the secondary battery, a battery module, a battery pack and an electrical device of the present application will be specifically described in detail with appropriate references to the accompanying drawings. However, unnecessary detailed description may be omitted. For example, detailed descriptions of well-known items and repeated descriptions of substantially the same configurations may be omitted. This is to avoid the following description from becoming unnecessarily lengthy and to facilitate the understanding of those skilled in the art. In addition, the drawings and the following description are provided for those skilled in the art to fully understand the present application, and are not intended to limit the subject matter described in the claims.

A "range" disclosed herein is defined in terms of lower and upper limits, and a given range is defined by selecting a lower limit and an upper limit that define the boundaries of the particular range. Ranges defined in this manner may be inclusive or exclusive of end values and may be combined arbitrarily, that is, any lower limit may be combined with any upper limit to form a range. For example, if ranges of 60-120 and 80-110 are listed for a particular parameter, it should be understood that ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2-3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution.

Unless stated otherwise, all technical features and optional technical features of the present application can be combined with each other to form a new technical solution.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprising" and "including" mentioned in the present application means that it is drafted in an open mode or in a close mode. For example, the transition phases "comprising" and "including" may mean that other components not listed may also be included or contained, or only the listed components may be included or contained.

In the present application herein, unless otherwise stated, the term "or" is inclusive. For example, the phrase "A or B" means "A, B, or both A and B." More specifically, any of the following conditions satisfy the condition "A or B": A is true (or exists) and B is false (or does not exist); A is false (or does not exist) and B is true (or exists); or both A and B are true (or exist).

In the lithium-ion battery of the related art, graphite is generally used as the negative electrode active material, but the negative electrode plate using graphite as the negative electrode active material is prone to rebound due to volume change in the manufacturing process and in the charging and discharging process of the battery. On the one hand, the rebound of the negative electrode plate leads to too high expansion force of the battery cell, so that the separator is squeezed and has a poor wettability in an electrolytic solution, which in turn increases polarization and causes the accelerated capacity attenuation of battery cell and the shorten service life. On the other hand, too high rebound of the negative electrode plate will further cause the electrode plate to break at corner, increasing the safety risk of battery cell. Therefore, in order to improve the service life and safety performance of lithium-ion batteries, it is urgent to reduce the rebound of the negative electrode plate due to volume changes during the manufacturing process and during charging and discharging process of batteries.

It has been proposed in the related art to mix lithium titanate ($Li_4Ti_5O_{12}$) with graphite and apply the mixture to the active material layer of the negative electrode plate to take advantage of the "zero strain" of lithium titanate to reduce the rebound of the negative electrode plate. However, the electronic conductivity of lithium titanate is only $10^{-13}$ s/cm, which greatly limits the electron transport between the current collector and the active material layer in the negative electrode plate, resulting in the deterioration of the rate performance of lithium-ion batteries. Furthermore, the lithium titanate has a potential of 1.5 V with respect to lithium, and a solid electrolyte interface film (SEI film) cannot be formed. Therefore, it is difficult for the active material layer comprising lithium titanate to form a dense SEI film, resulting in repeated destruction and regeneration of the SEI film, exacerbating the consumption of active lithium and thus causing the capacity attenuation of lithium-ion batteries.

Therefore, the negative electrode plate of the related art still needs to be improved in terms of reducing the rebound rate of the electrode plate while ensuring the rate performance of the batteries and reducing the capacity attenuation of the batteries.

In an embodiment of the present application, the present application provides a negative electrode plate comprising a current collector and an active material layer disposed on at least one surface of the current collector, wherein the active material layer comprises:

> a first graphite layer;
> a lithium titanate layer; and
> a second graphite layer,
> the first graphite layer is disposed on at least one surface of the current collector, the lithium titanate layer is disposed on a surface of the first graphite layer, and the second graphite layer is disposed on a surface of the lithium titanate layer, and
> the first graphite layer has an OI value of greater than or equal to 20.0, optionally from 30.0 to 40.0, and the second graphite layer has an OI value of less than or equal to 15.0, optionally from 8.0 to 12.0.

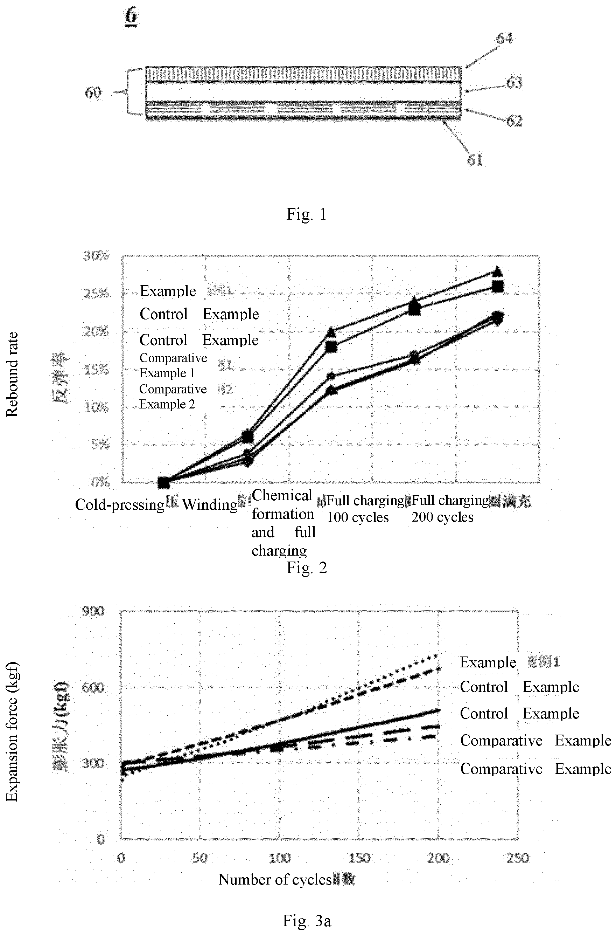

Although the mechanism is not yet clear, the applicant has unexpectedly found that: as shown in Fig. 1, by providing a lithium titanate layer (63) in the active material layer (60), the rebound of the negative electrode plate (6) due to the volume change in the manufacturing process and the charging and discharging process of battery can be reduced, thereby improving the service life and safety performance of the lithium-ion battery. The change in lattice constant and volume of lithium titanate crystal is less than 1% during the intercalation and de-intercalation of lithium ions. This characteristic of lithium titanate can be referred to as "zero strain" property. Therefore, providing the lithium titanate layer (63) in the active material layer (60) can reduce the rebound of the negative electrode plate caused by the volume change in the charging and discharging process of battery. Furthermore, the provision of the lithium titanate layer (63) can also relieve and/or disperse the stress accumulated in the first and second graphite layers (62, 64) during the manufacturing process of the negative electrode plate, for example during the cold-pressing step, thereby reducing the rebound of the plate caused by the slow release of the stress during subsequent use. By reducing the rebound of the negative electrode plate, the cycle performance and service life of the battery can be improved and the specific capacity attenuation during the cycling process can be reduced, so that the battery has the characteristics of very good resistance to overcharge and overdischarge. In addition, by reducing the rebound of the negative electrode plate, the break of the electrode at corner can be further avoided, thereby increasing the safety performance of the battery.

The lithium titanate layer may comprise lithium titanate, a conductive agent, a binder, and optionally a thickener. In the present application, the type of lithium titanate is not particularly limited as long as the lithium titanate can exert the above-described effect of reducing the rebound of the negative electrode plate. Optionally, the lithium titanate may be polycrystalline spherical particles. Optionally, the lithium titanate particles may have a particle diameter D50 of from 4 $\mu$m to 15 $\mu$m. The types of the conductive agent, the binder and optionally the thickener are not particularly limited, and those skilled in the art can make selections and decisions according to actual needs. The amounts of lithium titanate, the conductive agent, the binder, and optionally the thickener in lithium titanate layer are not particularly limited, and those skilled in the art can make selections and decisions according to actual needs. Optionally, relative to the total weight of the lithium titanate layer, the amount of lithium titanate may be from 85 wt.% to 96 wt.%; the amount of the conductive agent may be from 0.5 wt.% to 10.0 wt.%; the amount of the binder may be from 0.3 wt.% to 2.0 wt.%; and the amount of the optional thickener may be from 0.1 wt.% to 1.0 wt.%.

n the present application, by providing a first graphite layer having a higher OI value on at least one surface of the current collector, i.e. between the lithium titanate layer and the current collector layer, the problem of deterioration of rate performance due to too low electronic conductivity of lithium titanate is solved. Specifically, the first graphite layer has an OI value of greater than or equal to 20.0, optionally from 30.0 to 40.0. The first graphite layer having a higher OI value in the above ranges means that a higher proportion of the (004) crystal plane parallel to the graphite flake structure is exposed in the first graphite layer. This structure is very conducive to the flow of electrons on the graphite surface and the transmission of electrons through the current collector, which greatly increases the electronic conductivity of the negative electrode plate. Moreover, this structure can further enhance the adhesion between the first graphite layer and the current collector. Therefore, providing the first graphite layer having a higher OI value within the above ranges on the current collector surface can sufficiently ensure the rate performance of the lithium-ion battery by improving the electronic conductivity.

The first graphite layer may comprise a first graphite, a conductive agent, a binder, and optionally a thickener. The first graphite may be a commercially available product having a certain OI value specification. Optionally, the first graphite may be a graphite having an OI value of greater than 2.0 and less than or equal to 6.0, optionally from 3.0 to 5.0. The types of the conductive agent, the binder and optionally the thickener are not particularly limited, and those skilled in the art can make selections and decisions according to actual needs. The amounts of the first graphite, the conductive agent, the binder and optionally the thickener in the first graphite layer are not particularly limited, and those skilled in the art can make selections and decisions according to actual needs. Optionally, relative to the total weight of the first graphite layer, the amount of the first graphite may be 90.0 wt.% to 98.0 wt.%; the amount of the conductive agent may be 0.3 wt.% to 4.0 wt.%; the amount of the binder may be from 0.3 wt.% to 2.0 wt.%; and the amount of the optional thickener may be from 0.1 wt.% to 1.0 wt.%.

By changing the OI value of the first graphite, manufacturing process parameters of the negative electrode plate for example the pressure for cold-pressing and/or the thickness of the first graphite layer, the OI value of the first graphite layer can be adjusted to be in a range of greater than or equal to 20.0, optionally from 30.0 to 40.0.

In the present application, by providing a second graphite layer having a lower OI value on the surface of the lithium titanate layer, the conduction rate of lithium ions can be improved, the rate performance of the lithium-ion battery can be improved, and meanwhile the densification degree of the SEI film on the surface of the active material layer is improved, the consumption of active lithium ions is delayed, thereby reducing the capacity attenuation of the battery. Specifically, the second graphite layer may have an OI value of less than or equal to 15.0, optionally from 8.0 to 12.0. The second graphite layer having a lower OI value in the above ranges means that a higher proportion of the (110) crystal plane perpendicular to the graphite flake structure is exposed in the second graphite layer. This structure is very beneficial to the intercalation and de-intercalation of lithium ions in graphite, thus improving the conduction rate of lithium ions. Further, when the (110) crystal plane of graphite is in contact with the electrolytic solution, an SEI film can be formed thereon, while an SEI film is not easily formed on the (004) crystal plane. Therefore, a higher proportion of the exposed (110) crystal plane can also increase the density of the SEI film formed on the surface of the negative electrode active material layer, thereby delaying the consumption of active lithium ions during the charging and discharging process of the battery and reducing the capacity attenuation of the battery. Therefore, providing a second graphite layer with a lower OI value within the above ranges on the surface of the lithium titanate layer can sufficiently ensure the rate performance of the lithium-ion battery, while reducing the capacity attenuation of the lithium-ion battery.

The second graphite layer may comprise second graphite, a conductive agent, a binder, and optionally a thickener. The second graphite may be a commercially available product having a certain OI value specification. Optionally, the second graphite may be a graphite having an OI value of greater than or equal to 0.5 and less than 2.0, optionally from 1.0 to 1.5. The types of the conductive agent, the binder and optionally the thickener are not particularly limited, and those skilled in the art can make selections and decisions according to actual needs. The amounts of the second graphite, the conductive agent, the binder and optionally the thickener in the second graphite layer are not particularly limited, and those skilled in the art can make selections and decisions according to actual needs. Optionally, relative to the total weight of the second graphite layer, the amount of the second graphite may be 90.0 wt.% to 98.0 wt.%; the amount of the conductive agent may be 0.3 wt.% to 4.0 wt.%; the amount of the binder may be from 0.3 wt.% to 2.0 wt.%; and the amount of the optional thickener may be from 0.1 wt.% to 1.0 wt.%.

By changing the OI value of the second graphite, manufacturing process parameters of the negative electrode plate for example the pressure for cold-pressing and/or the thickness of the second graphite layer, the OI value of the second graphite layer can be adjusted to be in a range of less than or equal to 15.0, optionally from 8.0 to 12.0.

In some embodiments, the first graphite layer may have a thickness of less than or equal to 100 $\mu$m. When the thickness of the first graphite layer is less than or equal to 100 $\mu$m, an OI value of the first graphite layer of greater than or equal to 20.0, optionally from 30.0 to 40.0, can be achieved; At the same time, the adverse influences of graphite on the rebound characteristics of the negative electrode plate due to volume changes during manufacturing and use of the lithium-ion battery are minimized, and the productivity of the negative electrode plate can be improved.

In some embodiments, the lithium titanate layer may have a thickness of from 25 to 50 $\mu$m. When the thickness of the lithium titanate layer is greater than or equal to 25 $\mu$m, the effect of the lithium titanate layer on reducing the rebound of the negative electrode plate can be fully exerted. When the thickness of the lithium titanate layer is less than or equal to 50 $\mu$m, the adverse influences of the low electronic conductivity of the lithium titanate on the electron transport characteristics of the negative electrode plate are minimized, thereby ensuring the rate performance of the lithium-ion battery.

In some embodiments, the second graphite layer has a thickness of less than or equal to 100 $\mu$m. When the thickness of the second graphite layer is less than or equal to 100 $\mu$m, an OI value of the second graphite layer of less than or equal to 15.0, optionally from 8.0 to 12.0, can be achieved; At the same time, the adverse effects of graphite on the rebound characteristics of the negative electrode plate due to volume changes during manufacturing and use of the lithium-ion battery are minimized, and the productivity of the negative electrode plate can be improved.

In some embodiments, the active material layer has a thickness of from 50 to 150 $\mu$m. When the thickness of the active material layer is greater than or equal to 50 $\mu$m, the energy density of the negative electrode plate can be secured, thereby ensuring the capacity of the battery. When the thickness of the active material layer is less than or equal to 150 $\mu$m, the wettability of the electrode plate in the preparation process can be ensured, and the production efficiency can be improved.

In some embodiments, the negative electrode plate has a compacted density of from 0.9 to 1.8 g/cm$^3$. The compacted density of the negative electrode plate is mainly affected by the pressure for cold-pressing, but also by factors such as the characteristics of the active material in the active material layer, for example the grain size of lithium titanate. When the compacted density of the negative electrode plate is greater than or equal to 0.9 g/cm$^3$, the energy density of the lithium-ion battery can be sufficiently ensured, thus the capacity of the battery can be ensured, and the manufacturing cost of the battery can be further reduced, and the rate performance and cycle performance of the battery can be ensured. When the compacted density of the negative electrode plate is less than or equal to 1.8 g/cm$^3$, the wettability of the electrode plate during the preparation process can be ensured, the production efficiency of the electrode plate can be improved, and the rebound of the negative electrode plate can be further reduced, thereby further slowing down the capacity attenuation caused by too high expansion force of the battery, and further reducing the safety risks caused by the rebound of the negative electrode plate and further improving the rate performance and cycle performance of the battery.

The present application further provides a method for preparing a negative electrode plate, comprising:

providing a current collector;
forming a first graphite layer including first graphite on at least one surface of the current collector;
forming a lithium titanate layer including lithium titanate on a surface of the first graphite layer;
forming a second graphite layer including second graphite on a surface of the lithium titanate layer, to obtain a laminated body having an active material layer on at least one surface of the current collector, the active material layer including the first graphite layer, the lithium titanate layer, and the second graphite layer; and
cold-pressing the laminated body to obtain the negative electrode plate;
wherein the first graphite has an OI value of greater than 2.0 and less than or equal to 6.0, optionally from 3.0 to 5.0, and the second graphite has an OI value of greater than or equal to 0.5 and less than 2.0, and optionally from 1.0 to 1.5. Both the first graphite and the second graphite may be a commercially available product having the corresponding OI values.

By using the method the present application, the negative electrode plate according to the first aspect of the present application can be efficiently prepared.

In some embodiments, the laminated body may be formed by applying the first graphite layer, the lithium titanate layer, and the second graphite layer layer by layer in a conventional coating manner. The application or coating may be performed using a slurry formed by mixing first graphite, lithium titanate, serving as a negative electrode active material or mixing second graphite serving as a negative electrode active material, and a conductive agent, a binder, optionally a thickener, with deionized water serving as a solvent. Optionally, the mass ratio of the active material to the deionized water as solvent in the slurry may be 1:0.5-2, and optionally 1:0.8-1.5. Optionally, the slurry may have a shipment/delivery viscosity of from 5000 mPa • s to 25000 mPa • s. If the amount of deionized water is too low, the slurry will be too thick and have too high viscosity, which will lead to very difficult application of the slurry and poor uniformity of the coating layer; If the amount of deionized water is too high, the slurry will be too thin, so that it is necessary to increase the coating process time and thus reduce the production efficiency of electrode plate in order to achieve a fixed coating thickness.

Optionally, in the process of preparing the negative electrode plate, before the cold-pressing step, the thickness of the first graphite layer formed on at least one surface of the laminated body may be less than or equal to 200 μm; The thickness of the lithium titanate layer formed on the surface of the first graphite layer may be less than or equal to 100 μm; The thickness of the second graphite layer formed on the surface of the lithium titanate layer may be less than or equal to 200 μm; The thickness of the active material layer including the first graphite layer, the lithium titanate layer, and the second graphite layer may be from 100 μm to 300 μm.

In some embodiments, a pressure for cold-pressing may be from 15 T to 70 T. Optionally, the pressure for cold-pressing can be determined according to actual needs, in order to combine with factors such as the OI value and layer thickness of the graphite raw material, so that the OI values of the first graphite layer and the second graphite layer fall within the specific ranges described above, respectively. Moreover, by selecting and using the pressure for cold-pressing within the above ranges, the active material of the negative electrode plate can also be advantageously controlled to achieve a reasonable compacted density, and the pressure of greater than or equal to 15 T can ensure the compacted density of the negative electrode plate, thereby ensuring the energy density of the battery. When the pressure for cold-pressing is less than or equal to 70 T, it can avoid the decrease of electrolyte wettability caused by too high density of the electrode plate, thereby ensuring the production efficiency of the battery, and at the same time, it can also avoid the particles in the active material layer from breaking during the pressing process, thus affecting the safety of the battery.

In some embodiments, after cold-pressing the laminated body, the first graphite layer as formed may have an OI value of greater than or equal to 20.0, optionally from 30.0 to 40.0, and the second graphite layer as formed may have an OI value of less than or equal to 15.0, optionally from 8.0 to 12.0. As described above, after cold-pressing the laminated body, when the OI values of the first graphite layer and the second graphite layer in the negative electrode plate are adjusted to be within the above ranges, the rate performance of the lithium-ion battery to which the negative electrode plate is applied can be sufficiently ensured, meanwhile reducing the capacity attenuation of the lithium-ion battery.

In some embodiments, after cold-pressing the laminated body, the negative electrode plate as formed may have a compacted density of from 0.9 to 1.8 g/ cm$^3$. As described above, after cold-pressing the laminated body, when the compacted density of the negative electrode plate is adjusted to be within the above range, the capacity of the lithium-ion battery to which the negative electrode plate is applied can be sufficiently ensured, meanwhile ensuring the wettability of the electrode plate in the preparation process and the production efficiency of the electrode plate.

Optionally, after cold-pressing the laminated body, the thickness of the first graphite layer may be less than or equal to 100 $\mu$m; The thickness of the lithium titanate layer may be from 25 $\mu$m to 50 $\mu$m; The thickness of the second graphite layer may be less than or equal to 100 $\mu$m.

Optionally, after cold-pressing the laminated body, the active material layer as formed may have a thickness of from 50 $\mu$m to 150 $\mu$m.

The present application further provides a secondary battery, comprising:

a positive electrode plate;
the negative electrode plate of the present application as described above, or the negative electrode plate prepared according to the method of the present application as described above;
an electrolyte; and
a separator.

The present application further provides a battery module, comprising the secondary battery of the present application as described above.

The present application further provides a battery pack, comprising the battery module of the present application as described above.

The present application further provides an electrical device, comprising the secondary battery of the present application as described above, the battery module of the present application as described above, or the battery pack of the present application as described above.

In the negative electrode plate of the present application, by providing an active material layer comprising the first graphite layer having a specific and relatively high OI value, the lithium titanate layer and the second graphite layer having a specific and relatively low OI value on the current collector, the rebound of the negative electrode plate due to the volume change in the manufacturing process and the charging and discharging process of battery can be effectively reduced, thereby improving the service life and safety performance of the lithium-ion battery and meanwhile ensuring the rate performance of the battery and meanwhile reducing the capacity attenuation of the battery.

Hereafter, the secondary battery, the battery module, the battery pack and an electrical device of the present application will be specifically described with appropriate references to the accompanying drawings.

In an embodiment of the present application, a secondary battery is provided.

Normally, a secondary battery comprises a positive electrode plate, a negative electrode plate, an electrolyte and a separator. During the charging and discharging process of the battery, active ions are intercalated and deintercalated back and forth between the positive electrode plate and the negative electrode plate. The electrolyte conducts ions between the positive electrode plate and the negative electrode plate. The separator is disposed between the positive electrode plate and the negative electrode plate and is mainly used to prevent the short circuit between the positive electrode and the negative electrode and at the same time allows ions to pass through.

[Positive electrode plate]

The positive electrode plate may comprise a positive current collector and a positive electrode active material layer disposed on at least one surface of the positive current collector. As an example, the positive electrode current collector has two opposite surfaces in its own thickness direction, and the positive electrode active material layer is disposed on either or both of the two opposite surfaces of the positive electrode current collector.

The above positive electrode current collector may be a metal foil or a composite current collector. For example, aluminum foil may be used as the metal foil. The composite current collector may comprise a base layer of polymeric material and a metallic layer formed on at least one surface of the base layer of polymeric material. The composite current collector may be formed by forming a metal material (aluminum, aluminum alloy, nickel, nickel alloy, titanium, titanium alloy, silver, silver alloy, etc.) on a base material of polymeric material (such as polypropylene (PP), polyethylene terephthalate (PET), polybutylene terephthalate (PBT), polystyrene (PS), polyethylene (PE), and the like).

The positive electrode active material layer comprises the positive electrode active material. The positive electrode active material includes, but is not limited to, lithium cobalt oxide, lithium nickel manganese cobalt oxide, lithium nickel manganese aluminum oxide, lithium iron phosphate, lithium vanadium phosphate, lithium cobalt phosphate, lithium manganese phosphate, lithium iron silicate, lithium vanadium silicate, lithium cobalt silicate, lithium manganese silicate, spinel lithium manganese oxide, spinel lithium nickel manganese oxide, lithium titanate, and the like. One or a plurality of these may be used as the positive electrode active material.

Optionally, the positive electrode active material layer may further comprise a binder. However, the type of the binder is not specifically limited, and those skilled in the art can make selections according to actual needs. As an example, the binder may comprise one of more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, vinylidene fluoride-hexafluoropropylene copolymer, and fluorinated acrylate resins.

Optionally, the positive electrode active material layer may further comprise a conductive agent. However, the type of the conductive agent is not specifically limited, and those skilled in the art can make selections according to actual needs. For example, the conductive agent used for the positive electrode active material layer may be one or more selected from superconducting carbon, acetylene black, carbon black, Ketjen black, carbon dots, carbon nanotubes, graphene, and carbon nanofibers.

The preparation of the positive electrode plate may be carried out according to methods known in the art. As an example, a positive electrode active material, a conductive agent, and a binder can be dispersed in a solvent (such as N-methylpyrrolidone (NMP)) to form a uniform positive electrode slurry; the positive electrode slurry can be coated on a positive electrode current collector; after being dried, cold-pressed and other processes, positive electrode plate is obtained.

[Negative electrode plate]

In the negative electrode plate of the secondary battery of the present application, the negative electrode plate for the secondary battery as described above is used, the negative electrode plate comprising a current collector and an active material layer disposed on at least one surface of the current collector, wherein the active material layer comprises: a first graphite layer, a lithium titanate layer, and a second graphite layer. The first graphite layer is disposed on at least one surface of the current collector, the lithium titanate layer is disposed on a surface of the first graphite layer, and the second graphite layer is disposed on a surface of the lithium titanate layer, and the first graphite layer has an OI value of greater than or equal to 20.0, optionally from 30.0 to 40.0, and the second graphite layer has an OI value of less than or equal to 15.0, optionally from 8.0 to 12.0.

In a case where the active material layer is formed on only one surface of the current collector, the current collector and the active material layer of the negative electrode plate may have a structure as exemplarily shown in Fig. 1. In a case where an active material layer is formed on both surfaces of the current collector, the two active material layers of the negative electrode plate may have a symmetrical structure.

The negative electrode current collector may be a metal foil or a composite current collector. For example, copper foil may be used as the metal foil. The composite current collector may comprise a base layer of polymeric material and a metallic layer formed on at least one surface of the base layer of polymeric material. The composite current collector may be formed by forming a metal material (copper, copper alloy, nickel, nickel alloy, titanium, titanium alloy, silver, silver alloy, etc.) on a base material of polymeric material (such as polypropylene (PP), polyethylene terephthalate (PET), polybutylene terephthalate (PBT), polystyrene (PS), polyethylene (PE), and the like). Each of the first graphite layer, the lithium titanate layer, and the second graphite layer in the negative electrode active material layer may include a binder, a conductive agent, and optionally other auxiliary agents such as a thickener.

The conductive agents used in the first graphite layer, the lithium titanate layer, and the second graphite layer, respectively, may be the same as or different from each other, and may be selected by those skilled in the art according to their needs. For example, the conductive agent may be one or more selected from superconducting carbon, acetylene black, carbon black, Ketjen black, carbon dots, carbon nanotubes, graphene, and carbon nanofibers.

The binders used in the first graphite layer, the lithium titanate layer, and the second graphite layer, respectively, may be the same as or different from each other, and may be selected by those skilled in the art according to their needs. As an example, the binder may be one or more selected from styrene butadiene rubber (SBR), polyacrylic acid (PAA), sodium polyacrylate (PAAS), polyacrylamide (PAM), polyvinyl alcohol (PVA), sodium alginate (SA), poly (methyl methacrylate) (PMAA), and carboxymethyl chitosan (CMCS).

Other auxiliary agents used in the first graphite layer, the lithium titanate layer, and the second graphite layer, respectively, may be the same as or different from each other, and may be selected by those skilled in the art according to their needs. As examples, the auxiliary agent may comprise a thickener, e.g., sodium carboxymethylcellulose (CMC-Na) and the like.

According to the preparation method of the present application, a first graphite layer comprising first graphite is formed on at least one surface of the current collector, a lithium titanate layer comprising lithium titanate is formed on the surface of the first graphite layer, and a second graphite layer comprising second graphite is formed on the surface of the lithium titanate layer, to obtain an active material layer comprising the first graphite layer, the lithium titanate layer, and the second graphite layer; and then the obtained laminated body having the active material layer on at least one surface of the current collector is subjected to cold-pressing; after processes including oven drying and cold-pressing and the like, a negative electrode plate is obtained. The first graphite has an OI value of greater than 2.0 and less than or equal to 6.0, optionally from 3.0 to 5.0. The second graphite has an OI value of greater than or equal to 0.5 and less than 2.0, and optionally from 1.0 to 1.5.

As an example, the above-described first graphite, the conductive agent, the binder, and optionally other auxiliary agents can be dispersed in a solvent (e.g. deionized water) to form a homogeneous slurry, which is applied on at least one surface of the negative electrode current collector by a conventional coating process, and then oven-dried to obtain a first graphite layer. The lithium titanate layer is obtained by dispersing the lithium titanate, the conductive agent, the binder and optionally other auxiliary agents in a solvent (e.g. deionized water) to form a homogeneous slurry, which is applied onto the surface of the first graphite layer by a conventional coating process and then oven-dried to obtain a lithium titanate layer. The above-described second graphite, the conductive agent, the binder and optionally other auxiliary agents are dispersed in a solvent (e.g. deionized water) to form a homogeneous slurry, which is applied on the surface of the lithium titanate layer by a conventional coating process and then oven-dried to obtain a second graphite layer. Next, the obtained laminated body comprising the current collector, the first graphite layer, the lithium titanate layer, and the second graphite layer is cold-pressed at a pressure of 15 T to 70 T to obtain a negative electrode plate.

[Electrolyte]

The electrolyte conducts ions between the positive electrode plate and the negative electrode plate. There is no specific limitation on the type of electrolyte in the present application, and it can be selected according to the requirement. For example, the electrolyte may be in a liquid state, a gel state, or an all-solid state.

In some embodiments, an electrolytic solution is used as the above electrolyte. The electrolytic solution comprises an electrolyte salt and a solvent.

As an example, the electrolyte salt may be one or more selected from lithium hexafluorophosphate ($LiPF_6$), lithium tetrafluoroborate ($LiBF_4$), lithium perchlorate ($LiClO_4$), lithium hexafluoroarsenate ($LiAsF_6$), lithium difluorosulfonylimide (LiFSI), lithium bistrifluoromethanesulfonimide (LiTFSI), lithium trifluoromethanesulfonate (LiTFS), lithium difluorooxalate borate (LiDFOB), lithium dioxalate borate (LiBOB), lithium difluorophosphate ($LiPO_2F_2$), lithium difluorobis(oxalato)phosphate (LiDFOP), and lithium tetrafluorooxalate phosphate (LiTFOP).

As an example, the solvent may be one or more selected from fluorinated ethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethylsulfone (MSM), methylethylsulfone (EMS), and diethylsulfone (ESE).

In some embodiments, optionally, the electrolyte may further comprise an additive. For example, the electrolyte may comprise negative electrode film-forming additives, positive electrode film-forming additives, and additives that improve overcharge performance of the battery, additives that improve high-temperature performance of the battery, and additives that improve low-temperature performance of the battery.

[Separator]

The separator separates the positive electrode plate from the negative electrode plate, preventing a short circuit inside the battery, meanwhile enabling active ions to move between the positive and negative electrodes through the separator. In the secondary battery of the present application, the type of the separator is not particularly limited, and any well-known porous-structure separator having good electrochemical stability and mechanical stability may be selected.

In some embodiments, the material of the separator may be one or more selected from glass fiber film, nonwoven fabric film, polyethylene (PE) film, polypropylene (PP) film, polyvinylidene fluoride film, and multi-layer composite film containing one or more of the above. The separator may be a single-layer separator or a multilayer separator, without particular limitation. When the separator is a multilayer separator, the materials of respective layers may be the same or different, without particular limitation.

In some embodiments, the positive electrode plate, the negative electrode plate, and the separator may be wound and/or stacked into an electrode assembly. In the present application, when assembling the electrode assembly, the second graphite layer on the negative electrode plate is oriented facing the separator.

In some embodiments, the secondary battery may comprise an outer packaging. The outer packaging may be used to encapsulate the electrode assembly and the electrolytic solution as described above.

In some embodiments, the outer packaging of the secondary battery may be a hard housing, such as a hard plastic housing, aluminum housing, steel housing, and the like. The outer packaging of the secondary battery may also be a soft pack, such as a pouch type soft pack. The material of the soft pack may be plastic, examples of which include polypropylene (PP), polybutylene terephthalate (PBT), polybutylene succinate (PBS), and the like.

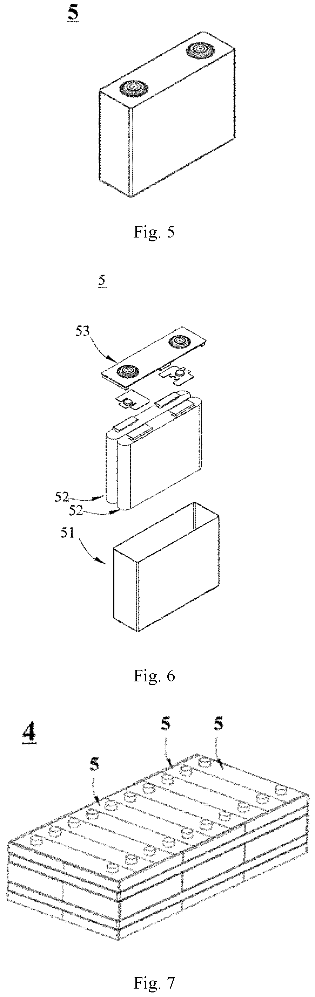

The present application does not particularly limit the shape of the secondary battery, which can be cylindrical, square or other arbitrary shapes. For example, Fig. 5 shows a secondary battery 5 in the shape of a square structure as an example.

In some embodiments, referring to Fig. 6, the outer packaging may comprise a housing 51 and a top cover component 53. In an example, the housing 51 may include a bottom plate and a side plate connected to the bottom plate, and the bottom plate and the side plate are combined to form an accommodating cavity. The housing 51 has an opening communicating with the accommodating cavity, and the top cover component 53 can cover the opening to close the accommodating cavity. The positive electrode plate, the negative electrode plate, and the separator may be stacked or wound into a battery assembly 52. The battery assembly 52 is encapsulated within the accommodating cavity. The electrolytic solution is infiltrated in the electrode assembly 52. The number of electrode assemblies 52 included in the secondary battery 5 may be one or multiple, and can be determined by those skilled in the art according to particular actual needs.

In some embodiments, the secondary battery may be assembled into a battery module; the number of the secondary batteries included in the battery module may be one or multiple, and the specific number can be determined by those skilled in the art according to the application and desirable capacity of the battery module.

Fig. 7 shows a battery module 4 as an example. Referring to Fig. 7, in the battery module 4, a plurality of secondary batteries 5 may be disposed sequentially in the length direction of the battery module 4. Apparently, they may also be disposed in any other manner. Furthermore, the plurality of secondary batteries 5 may be fixed by fasteners.

Optionally, the battery module 4 may further include a housing having an accommodating space in which a plurality of secondary batteries 5 are accommodated.

In some embodiments, the above-mentioned battery modules may also be assembled into a battery pack, and the number of battery modules contained in the battery pack can be determined by those skilled in the art according to the application and capacity of the battery pack.

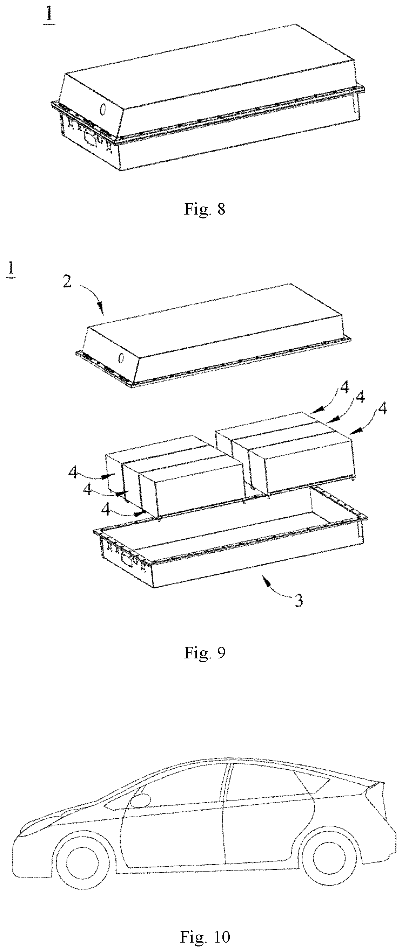

Figs. 8 and 9 show a battery pack 1 as an example. With reference to Figs. 8 and 9, the battery pack 1 may include a battery case and a plurality of battery modules 4 provided in the battery case. The battery case comprises an upper case body 2 and a lower case body 3. The upper case body 2 can cover the lower case body 3 to form a closed space for receiving the battery modules 4. A plurality of battery modules 4 can be disposed in the battery case in any manner.

In addition, the present application further provide an electrical device comprising the secondary battery, the battery module, or the battery pack of the present application. The secondary battery, battery module or battery pack may be used as a power source of the electrical device, and may also be used as an energy storage unit of the electrical device. The electrical device may include, but is not limited to, a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf vehicle, an electric truck), an electric train, a ship, a satellite, an energy storage system, etc.

As used in the electrical device, the secondary battery, the battery module or the battery pack may be selected according to the usage requirements of the electrical device.

Fig. 10 shows an electrical device as an example. The electrical device is a pure electric vehicle, a hybrid electric vehicle, or a plug-in hybrid electric vehicle. In order to meet the requirements of the electrical device for high power and high energy density of secondary batteries, the battery pack or battery module can be used.

As another example, the electrical device may be a mobile phone, a tablet computer, a notebook computer, etc. The electric device is generally required to be light and thin, and a secondary battery can be used as a power source.

Examples

Hereinafter, examples of the present application will be described. The examples described below are exemplary and are merely used to explain the present application, and are not to be construed as limiting the present application. If specific techniques or conditions are not specified in the examples, the techniques or conditions described in literatures in the art or in accordance with the product specification shall be carried out. If the manufacturer of the reagent or instrument used is not specified, they are conventional products that can be commercially obtained.

Preparation of negative electrode plate

A first graphite having an OI value of greater than 2.0 and less than or equal to 6.0, carbon black (Betray New Materials Group Co., Ltd., under the model of BSC) as a conductive agent, styrene butadiene rubber (SBR) (PetroChina Jilin Petrochemical Company, under the model of 1520) as a binder, and sodium hydroxymethylcellulose (CMC) (Japan Daicel Co., Ltd., under the model of 200) as a thickener were added to deionized water at a mass ratio of 97.2:0.8:0.8: 1.2, and thoroughly stirred, and uniformly mixed to prepare a slurry for forming the first graphite layer (having solid content of 50%). The above-mentioned slurry was uniformly applied on a current collector copper foil having a thickness of 6 $\mu$m by a conventional process, and then oven-dried at a temperature of 80 °C to 150 °C, thereby forming a first graphite layer on the current collector aluminum foil.

Next, lithium titanate (Jiawei New Energy Co., Ltd., under the model of T200), carbon black as a conductive agent, styrene-butadiene rubber (SBR) as a binder, and sodium hydroxymethylcellulose (CMC) as a thickener were added to deionized water at a mass ratio of 97.2:0.8:0.8:1.2, and thoroughly stirred, and uniformly mixed to prepare a slurry for forming a lithium titanate layer (having solid content of 50%). The slurry was uniformly applied on the first graphite layer as formed above by a conventional process, and then oven-dried at a temperature of 80 °C to 150 °C, thereby forming a lithium titanate layer on the first graphite layer.

Next, a second graphite having an OI value of greater than or equal to 0.5 and less than 2.0, carbon black as a conductive agent, styrene butadiene rubber (SBR) as a binder, and sodium hydroxymethylcellulose (CMC) as a thickener were added to deionized water at a mass ratio of 97.2:0.8:0.8:1.2, and thoroughly stirred, and uniformly mixed to prepare a slurry for forming the second graphite layer (having solid content of 50%). The above-mentioned slurry was uniformly applied on the lithium titanate layer as formed above by a conventional process, and then oven-dried at a temperature of 80 °C to 150 °C, thereby forming a second graphite layer on the lithium titanate layer.

The electrode plate in which the active material layer comprising the first graphite layer, the lithium titanate layer, and the second graphite layer was applied on the above formed current collector was cold-pressed at a pressure of 15 T to 70 T, and then slitted to obtain a negative electrode plate.

Preparation of battery

In the examples of the present application, the battery cell was prepared by the following method.

(1) Preparation of positive electrode plate

The positive electrode active material $LiNi_{0.8}Co_{0.1}Mn_{0.1}O_2$ (NCM 811) (Ningbo Rongbai New Energy Technology Co., Ltd., under the model of S85E), carbon black as a conductive agent, and polyvinylidene fluoride (PVDF) (Japan Kuhu Co., Ltd., under the model of W9200) as a binder were mixed at the mass ratio of 97:1.5:1.5, and after adding the solvent N-methylpyrrolidone (NMP), the mixture was thoroughly stirred, and uniformly mixed to prepare a positive electrode slurry (having solid content of 70%). The positive electrode slurry was uniformly applied on a current collector aluminum foil with a thickness of 13 $\mu$m at a coating amount of 0.2 mg/mm$^2$ by a conventional process, then oven-dried at a temperature of 100 °C to 130 °C, cold-pressed at a pressure of 40 T, and then slitted to obtain a positive electrode plate.

(2) Preparation of electrolytic solution

In an argon atmosphere glove box ($H_2O$<0.1 ppm, $O_2$<0.1 ppm), ethylene carbonate (EC)/methyl ethyl carbonate (EMC) in a volume ratio of 3/7 as organic solvents were mixed, then 12.5% of $LiPF_6$ lithium salt was added and dissolved in the organic solvents (having a molar concentration of 1.2 mol/L), and after stirring evenly, the electrolytic solution for lithium-ion battery was obtained.

(3) Preparation of battery

The positive electrode plate obtained in the above steps, a polypropylene film (Yunnan Enjie New Material Co., Ltd., under the model of ND7) as a separator, and a negative electrode plate were laminated in the above order so that the second graphite layer on the negative electrode plate faced the separator. Then after wounding, a bare battery cell was obtained. Tabs were welded to the bare battery cells and the bare battery cells were packed into aluminum housing. The assembled battery cells were baked at 100 °C to remove water, and then electrolytic solution was injected to obtain an uncharged battery. The uncharged battery was sequentially subjected to standing, hot-pressing and cold-pressing, chemical formation, shaping and capacity testing to obtain a lithium-ion battery.

Performance Test

(1) OI values of first graphite layer and second graphite layer

The OI values of the first graphite layer and second graphite layer was determined by an X-ray diffraction method on a polycrystalline X-ray diffractometer (Bruker, D8 Discover). A sample to be measured was placed horizontally on sample table and scanned in continuous mode (with scanning interval of from 10° to 80° and scanning speed 2°/min) to obtain the corresponding diffraction spectrum. According to the diffraction spectrum, the diffraction peak intensity of the (004) crystal plane was determined as I(004), and the diffraction peak intensity of the (110) crystal plane was determined as I(110); and the OI value was calculated by the equation as follows:

$$OI = I(004)/I(110)$$

In the above measurement, the samples to be measured of the first graphite layer and the second graphite layer was obtained by the following method:

A 10 cm × 10 cm negative electrode plate was taken, with the thickness values of the first graphite layer, the lithium titanate layer and the second graphite layer of the negative electrode plate being d1, d2 and d3, respectively, and the graphite with a thickness of d3/2 on the surface was uniformly scraped off with a blade, using a millimeter scale for the determination of the scraped thickness. A small piece of 2 cm × 2 cm was cut from the negative electrode plate obtained as described above after scraping off the layer with a predetermined thickness, to obtain a sample for measuring the OI value of the second graphite layer.

A 10 cm × 10 cm negative electrode plate was taken, with the thickness values of the first graphite layer, the lithium titanate layer and the second graphite layer of the negative electrode plate being d1, d2 and d3, respectively, and the graphite with the thickness of (d3+d2+d1/2) on the surface was uniformly scraped off with a blade, using a millimeter scale for the determination of the scraped thickness. A small piece of 2 cm × 2 cm was cut from the negative electrode plate obtained as described above after scraping off the layer with a predetermined thickness, to obtain a sample for measuring the OI value of the first graphite layer.

(2) Rebound rate of negative electrode plate

The thickness of the negative electrode plate was measured using a millimeter scale. The thickness of the negative electrode plate after cold-pressing was recorded as R. In the preparation of the battery, the positive electrode plate, the separator, and the negative electrode plate were stacked, and after sufficient rebound, the thickness of the negative electrode plate was measured and denoted as S before being wound into a bare battery cell. After the chemical formation and full charging, the thickness of the negative electrode plate was measured and recorded as T. After the prepared lithium-ion battery was cycled 100 cycles at a temperature of 45 °C under cycle conditions of a pre-tightening force of 200 kgf, a charge rate of 0.5 C, and a discharge rate of 1 C, the thickness of the negative electrode plate was measured and denoted as U. After 200 cycles under the above cycle conditions, the thickness of the negative electrode plate was measured and denoted as V. The rebound rates of the negative electrode plate at different stages were calculated according to the following equations:

$$\text{Rebound rate (winding)} = (S/R-1) \times 100\%$$

$$\text{Rebound rate (chemical formation and full charging)} = (T/R-1) \times 100\%$$

$$\text{Rebound rate (100 cycles)} = (U/R-1) \times 100\%$$

$$\text{Rebound rate (200 cycles)} = (V/R-1) \times 100\%$$

By drawing the rebound rate at different stages as Y-axis, the trend chart of the rebound rate change of the negative electrode plate can be obtained.

(3) Battery expansion force

Before the battery was charged and discharged, the battery and the pressure sensor were clamped using a clamp composed of three aluminum plates. Specifically, the pressure sensor was placed in the upper space between the first aluminum plate and the second aluminum plate, the battery was placed in the lower space between the second aluminum plate and the third aluminum plate, and then a pre-tightening force Fo of 200 kgf was applied while fixing the clamp using bolts.

Next, the battery was cycled at a temperature of 45 °C under cycle conditions of a charge rate of 0.5 C and a discharge rate of 1 C. The reading of the pressure sensor in the clamp when the battery cell was fully charged during each cycle was recorded as the battery expansion force $F_n$ of lithium-ion battery after the corresponding number of cycles. By taking the number of cycles as X-axis and the expansion force of the lithium-ion battery after the corresponding number of cycles as Y-axis, a graph showing the change of expansion force as a function of the number of cycles can be obtained.

The expansion force growth rate $E_n$ of the battery per cycle was calculated according to the following equation:

$$E_n = [(F_n - 200)/200)] \times 100\%$$

(4) Cycle capacity retention ratio

At 45 °C, the battery was charged at a constant current of 1/3 C to 4 V, then charged at a constant voltage of 4 V to a current of 0.05 C, allowed to stand for 5 minutes, and discharged at 1/3 C to 2.5 V; The resulting capacity was recorded as the initial capacity Co. Then, the battery was cycled under the same conditions as described above, and the discharge capacity $C_n$ of the battery after the n-th cycle was recorded. The cycle capacity retention ratio $P_n$ of the battery after each cycle was calculated according to the following equation:

$$P_n = (C_n/C_0) \times 100\%$$

By taking the number of cycles as X-axis and the cycle capacity retention ratio of the lithium-ion battery after the corresponding number of cycles as Y-axis, a graph showing the change of cycle capacity retention ratio as a function of the number of cycles can be obtained.

(5) Rate capacity retention ratio

At 25 °C, the battery was charged at a constant current of 1/3 C to 4 V, then charged at a constant voltage of 4 V to a current of 0.05 C, allowed to stand for 5 minutes, and discharged at 0.1 C to 2.5 V; The average capacity obtained after 5 cycles was recorded as the initial capacity $D_0$. Then, the battery was charged under the same conditions as described above, discharged at 1 C, and the average value of the capacity obtained after 5 cycles was denoted as the initial capacity $D_1$. The rate capacity retention ratio $Q_1$ of the battery was calculated according to the following equation:

$$Q_1 = (D_1/D_0) \times 100\%$$

Similarly, the rate capacity retention ratio $Q_2$ of the battery was measured. In particular, at 25 °C, the battery was charged at a constant current of 1/3 C to 4 V, then charged at a constant voltage of 4 V to a current of 0.05 C, allowed to stand for 5 minutes, and discharged at 0.1C to 2.5 V; The average capacity obtained after 5 cycles was recorded as the initial capacity $D_0$. Then, the battery was charged under the same conditions as described above, discharged at 2 C, and the average value of the capacity obtained after 5 cycles was denoted as the initial capacity $D_2$. The rate capacity retention ratio $Q_2$ of the battery was calculated according to the following equation:

$$Q_2 = (D_2/D_0) \times 100\%$$

Example 1

According to the above-described method for manufacturing the negative electrode plate, a slurry for forming a first graphite layer was prepared using first graphite having an OI value of 5.0 (Betray New Materials Group Co., Ltd., under the model of BFC-18), and applied at a coating amount of 0.04 mg/mm$^2$ on both surfaces of the current collector, and then oven-dried at 100 °C, to form the first graphite layer having a thickness of 60 $\mu$m; A slurry for forming a lithium titanate layer was applied at a coating amount of 0.12 mg/mm$^2$ and then oven-dried at 100 °C, to form the lithium titanate layer having a thickness of 80 $\mu$m; A slurry for forming a second graphite layer was prepared using a second graphite having an OI value of 1.0 (Betray New Materials Group Co., Ltd., under the model of GSN), and applied at a coating amount of 0.04 mg/mm$^2$ on the lithium titanate layer, and then oven-dried at 100 °C, to form the second graphite layer having a thickness of 60 $\mu$m. As a result, an active material layer comprising a first graphite layer, a lithium titanate layer, and a second graphite layer was applied on both surfaces of the current collector. Next, the electrode plate in which the above active material layer was applied on the current collector was cold-pressed at a pressure of 40 T, and then slitted to obtain the negative electrode plate of Example 1. In Example 1, the thicknesses of the first graphite layer, the lithium titanate layer, and the second graphite layer in the obtained negative electrode plate after cold-pressing were 30 $\mu$m, 40 $\mu$m, and 30 $\mu$m, respectively. The negative electrode plate obtained by cold-pressing had a thickness R of 206 $\mu$m and a compacted density of 1.6 g/cm$^3$.

The OI values of the first graphite layer and the second graphite layer in the negative electrode plate of Example 1 were respectively measured by the test method described above, and the results were shown in Table 1.

A lithium-ion battery was prepared by the method described above using the negative electrode plate of Example 1. During the preparation process, the rebound rate of the negative electrode plate of Example 1 before winding was measured by the method described above. In addition, the rebound rate of the negative electrode plate after full charge, the rebound rate of the negative electrode plate after 100 cycles, and the rebound rate of the negative electrode plate after 200 cycles of the lithium-ion battery prepared using the negative electrode plate of Example 1 were measured by the methods described above. The measurement results of the rebound rate of the negative electrode plate of Example 1 at different stages were shown in Table 1. A graph showing the trend of the rebound rate of negative electrode plate in Example 1 was shown in Fig. 2.

The cycle expansion force of the lithium-ion battery prepared in Example 1 was measured by the test methods described above. The results of the cycle expansion force after 200 cycles and the corresponding growth rate of expansion force of the lithium-ion battery prepared in Example 1 were also shown in Table 1. A graph showing the expansion force of the lithium-ion battery prepared in Example 1 as a function of the number of cycles was shown in Fig. 3a.

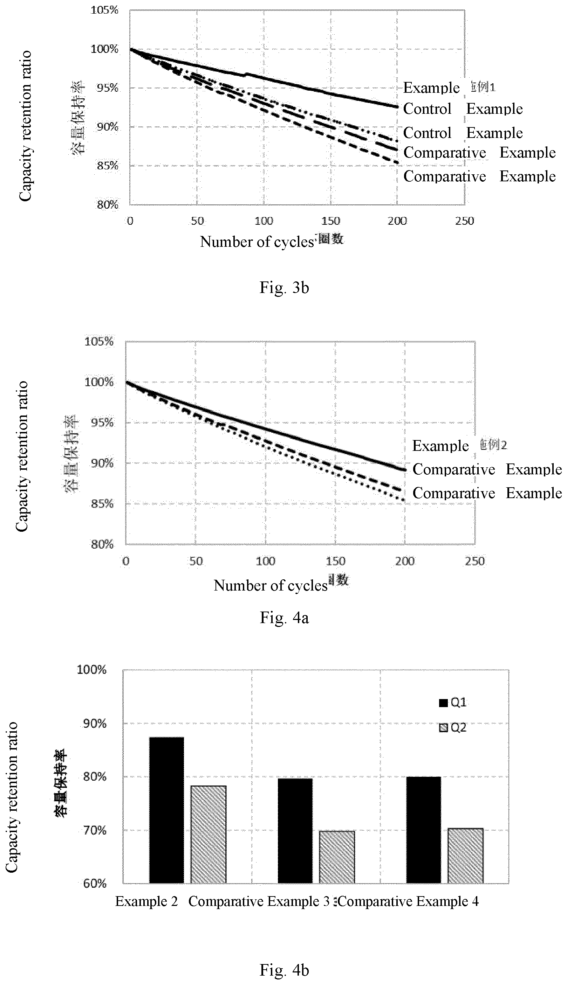

The cycle capacity retention ratio of the lithium-ion battery prepared in Example 1 was measured by the test methods described above. The results of the cycle capacity retention ratio $P_{200}$ of the lithium-ion battery prepared in Example 1 after 200 cycles were also shown in Table 1. A graph showing the cycle capacity retention ratio of the lithium-ion battery prepared in Example 1 as a function of the number of cycles was shown in Fig. 3b.

The rate capacity retention ratios $Q_1$ and $Q_2$ of the lithium-ion battery prepared in Example 1 were measured by the test methods described above, and the testing results were also shown in Table 1.

Control Example 1

A negative electrode plate comprising an active material layer comprising only the second graphite layer was formed on a current collector copper foil having a thickness of 6 $\mu$m. In Control Example 1, the method for forming the second graphite layer was basically the same as the corresponding method in Example 1, except that the thickness of the active material layer comprising only the second graphite layer after the applying and drying steps was 200 $\mu$m. Next, the electrode plate in which the above active material layer was applied on the current collector was cold-pressed at a pressure of 40 T, and then slitted to obtain the negative electrode plate of Control Example 1. In Control Example 1, after cold-pressing, the active material layer had a thickness of 100 $\mu$m. The negative electrode plate obtained by cold-pressing had a thickness R of 206 $\mu$m and a compacted density of 1.6 g/cm$^3$.

The OI value of the second graphite layer in the negative electrode plate of Control Example 1 was measured by the test method described above, and the result was also shown in Table 1.

A lithium-ion battery was prepared by the method described above using the negative electrode plate of Control Example 1. The rebound rates of the negative electrode plate of Control Example 1 at different stages were measured by the test method described above, and the results were also shown in Table 1. A graph showing the trend of the rebound rate of negative electrode plate in Control Example 1 was shown in Fig. 2.

The cycle expansion force of the lithium-ion battery prepared in Control Example 1 was measured by the test methods described above. The results of the cycle expansion force after 200 cycles and the corresponding growth rate of expansion force of the lithium-ion battery prepared in Control Example 1 were also shown in Table 1. A graph showing the expansion force of the lithium-ion battery prepared in Control Example 1 as a function of the number of cycles was shown in Fig. 3a.

The cycle capacity retention ratio of the lithium-ion battery prepared in Control Example 1 was measured by the test methods described above. The results of the cycle capacity retention ratio $P_{200}$ of the lithium-ion battery prepared in Control Example 1 after 200 cycles were also shown in Table 1. A graph showing the cycle capacity retention ratio of the lithium-ion battery prepared in Control Example 1 as a function of the number of cycles was shown in Fig. 3b.

The rate capacity retention ratios $Q_1$ and $Q_2$ of the lithium-ion battery prepared in Control Example 1 were measured by the test methods described above, and the testing results were also shown in Table 1.

Control Example 2

A negative electrode plate comprising an active material layer comprising only the first graphite layer was formed on a current collector copper foil having a thickness of 6 $\mu$m. In Control Example 2, the method for forming the first graphite layer was basically the same as the corresponding method in Example 1, except only that the thickness of the active material layer comprising only the first graphite layer after the applying and drying steps was 200 $\mu$m. Next, the electrode plate in which the above active material layer was applied on the current collector was cold-pressed at a pressure of 40 T, and then slitted to obtain the negative electrode plate of Control Example 2. In Control Example 2, after cold-pressing, the active material layer had a thickness of 100 $\mu$m. The negative electrode plate obtained by cold-pressing had a thickness R of 206 $\mu$m and a compacted density of 1.6 g/cm$^3$.

The OI value of the first graphite layer in the negative electrode plate of Control Example 2 was measured by the test method described above, and the result was also shown in Table 1.

A lithium-ion battery was prepared by the method described above using the negative electrode plate of Control Example 2. The rebound rates of the negative electrode plate of Control Example 2 at different stages were measured by the test method described above, and the results were also shown in Table 1. A graph showing the trend of the rebound rate of negative electrode plate in Control Example 2 was shown in Fig. 2.

The cycle expansion force of the lithium-ion battery prepared in Control Example 2 was measured by the test methods described above. The results of the cycle expansion force after 200 cycles and the corresponding growth rate of expansion force of the lithium-ion battery prepared in Control Example 2 were also shown in Table 1. A graph showing the expansion force of the lithium-ion battery prepared in Control Example 2 as a function of the number of cycles was shown in Fig. 3a.

The cycle capacity retention ratio of the lithium-ion battery prepared in Control Example 2 was measured by the test methods described above. The results of the cycle capacity retention ratio $P_{200}$ of the lithium-ion battery prepared in Control Example 2 after 200 cycles were also shown in Table 1. A graph showing the cycle capacity retention ratio of the lithium-ion battery prepared in Control Example 2 as a function of the number of cycles was shown in Fig. 3b.

The rate capacity retention ratios $Q_1$ and $Q_2$ of the lithium-ion battery prepared in Control Example 2 were measured by the test methods described above, and the testing results were also shown in Table 1.

Comparative Example 1

A negative electrode plate comprising an active material layer comprising only the lithium titanate layer and the second graphite layer was formed on a current collector copper foil having a thickness of 6 $\mu$m. In Comparative Example 1, the method for forming the lithium titanate layer and the second graphite layer was basically the same as the corresponding method in Example 1. The thicknesses of the lithium titanate layer and the second graphite layer formed after the applying and drying steps in Comparative Example 1 were 100 $\mu$m and 100 $\mu$m, respectively. Next, the electrode plate in which the above active material layer was applied on the current collector was cold-pressed at a pressure of 40 T, and then slitted to obtain the negative electrode plate of Comparative Example 1. In Comparative Example 1, after cold-pressing, the active material layer had a thickness of 100 $\mu$m. The negative electrode plate obtained by cold-pressing had a thickness R of 206 $\mu$m and a compacted density of 1.6 g/cm$^3$. The OI value of the second graphite layer in the negative electrode plate of Comparative Example 1 was measured by the test method described above, and the result was also shown in Table 1.

A lithium-ion battery was prepared by the method described above using the negative electrode plate of Comparative Example 1. The rebound rates of the negative electrode plate of Comparative Example 1 at different stages were measured by the test method described above, and the results were also shown in Table 1. A graph showing the trend of the rebound rate of negative electrode plate in Comparative Example 1 was shown in Fig. 2.

The cycle expansion force of the lithium-ion battery prepared in Comparative Example 1 was measured by the test methods described above. The results of the cycle expansion force after 200 cycles and the corresponding growth rate of expansion force of the lithium-ion battery prepared in Comparative Example 1 were also shown in Table 1. A graph showing the expansion force of the lithium-ion battery prepared in Comparative Example 1 as a function of the number of cycles was shown in Fig. 3a.

The cycle capacity retention ratio of the lithium-ion battery prepared in Comparative Example 1 was measured by the test methods described above. The results of the cycle capacity retention ratio $P_{200}$ of the lithium-ion battery prepared in Comparative Example 1 after 200 cycles were also shown in Table 1. A graph showing the cycle capacity retention ratio of the lithium-ion battery prepared in Comparative Example 1 as a function of the number of cycles was shown in Fig. 3b.

The rate capacity retention ratios $Q_1$ and $Q_2$ of the lithium-ion battery prepared in Comparative Example 1 were measured by the test methods described above, and the testing results were also shown in Table 1.

Comparative Example 2

A negative electrode plate comprising an active material layer comprising only the first graphite layer and the lithium titanate layer was formed on a current collector copper foil having a thickness of 6 $\mu$m. In Comparative Example 2, the method for forming the first graphite layer and the lithium titanate layer was basically the same as the corresponding method in Example 1. The thicknesses of the first graphite layer and the lithium titanate layer formed after the applying and drying steps in Comparative Example 2 were 100 $\mu$m and 100 $\mu$m, respectively. Next, the electrode plate in which the above active material layer was applied on the current collector was cold-pressed at a pressure of 40 T, and then slitted to obtain the negative electrode plate of Comparative Example 2. In Comparative Example 2, after cold-pressing, the active material layer had a thickness of 100 $\mu$m. The obtained negative electrode plate had a thickness R of 206 $\mu$m and a compacted density of 1.6 g/cm$^3$.

The OI value of the first graphite layer in the negative electrode plate of Comparative Example 2 was measured by the test method described above, and the result was also shown in Table 1.

A lithium-ion battery was prepared by the method described above using the negative electrode plate of Comparative Example 2. The rebound rates of the negative electrode plate of Comparative Example 2 at different stages were measured by the test method described above, and the results were also shown in Table 1. A graph showing the trend of the rebound rate of negative electrode plate in Comparative Example 2 was shown in Fig. 2.

The cycle expansion force of the lithium-ion battery prepared in Comparative Example 2 was measured by the test methods described above. The results of the cycle expansion force after 200 cycles and the corresponding growth rate of expansion force of the lithium-ion battery prepared in Comparative Example 2 were also shown in Table 1. A graph showing the expansion force of the lithium-ion battery prepared in Comparative Example 2 as a function of the number of cycles was shown in Fig. 3a.

The cycle capacity retention ratio of the lithium-ion battery prepared in Comparative Example 2 was measured by the test methods described above. The results of the cycle capacity retention ratio $P_{200}$ of the lithium-ion battery prepared in Comparative Example 2 after 200 cycles were also shown in Table 1. A graph showing the cycle capacity retention ratio of the lithium-ion battery prepared in Comparative Example 2 as a function of the number of cycles was shown in Fig. 3b.

The rate capacity retention ratios $Q_1$ and $Q_2$ of the lithium-ion battery prepared in Comparative Example 2 were measured by the test methods described above, and the testing results were also shown in Table 1.

Table 1

| | | Example 1 | Control Example 1 | Control Example 2 | Comparative Example 1 | Comparative Example 2 |
|---|---|---|---|---|---|---|
| OI value of first graphite layer | | 35.0 | - | 35.0 | - | 35.0 |
| OI value of second graphite layer | | 10.0 | 10.0 | - | 10.0 | - |
| Rebound rate | Winding | 3.9% | 6% | 6.5% | 2.7% | 3.2% |
| | Chemical formation and full charging | 14.1% | 18% | 20% | 12.3% | 12% |
| | 100 cycles | 17% | 23% | 24% | 16.3% | 16% |
| | 200 cycles | 22% | 26% | 28% | 21.5% | 22.4% |
| Battery expansion force after 200 cycles | | 513 | 668 | 736 | 405 | 446 |
| Growth rate of expansion force | | 146% | 234% | 268% | 123% | 135% |
| Cycle capacity retention ratio $P_{200}$ | | 92.5% | 85.3% | 88.1% | 88.2% | 87.0% |
| Rate capacity retention ratio $Q_1$ | | 88.5% | 91.6% | 83.1% | 78.2% | 85.4% |
| Rate capacity retention ratio $Q_2$ | | 79.4% | 82.1% | 72.3% | 65.6% | 74.7% |

As can be seen from the results of Table 1, the active material layer of the negative electrode plate in Example 1 comprises a first graphite layer having a relatively high OI value, a lithium titanate layer, and a second graphite layer having a relatively low OI value. Under the joint action of the above layers in the active material layer, the rebound of the negative electrode plate during the manufacturing process and the charge and discharge cycle of battery was suppressed, and the rate performance of the lithium-ion battery was fully ensured, and the capacity attenuation of the lithium-ion battery during the cycle was significantly reduced.

In both Control Example 1 and Control Example 2, the negative electrode plates did not comprise lithium titanate, and thus the rebound of the negative electrode plates during the manufacturing process and the cycling process of the lithium-ion battery cannot be suppressed. Compared with Example 1, in Control Example 1 and Control Example 2, as shown in Fig. 2, the rebound rates of the negative electrode plates were significantly too high during the manufacturing process of the lithium-ion batteries; As shown in Fig. 3a, during the charge and discharge cycle of the lithium-ion batteries, the expansion forces of the batteries were also significantly too high. As a result, as shown in Fig. 3b, the batteries had poor cycle performance, and the capacities of batteries were significantly attenuated with the increasing number of charge and discharge cycles.

In Comparative Example 1, the rebound of the negative electrode plate was reduced, but since the active material layer did not comprise the first graphite layer, the lithium titanate layer was directly formed on the surface of the current collector, and thus the negative electrode plate had poor electron conductivity. Compared with Example 1, the rate performance of the lithium-ion battery of Comparative Example 1 was inferior, and the rate capacity retention ratios $Q_1$ and

$Q_2$ both were significantly reduced.

In Comparative Example 2, the rebound of the negative electrode plate was also reduced, but since the active material layer did not comprise the second graphite layer, a stable and dense SEI film cannot be formed on the surface of the active material layer, lithium ions were continuously consumed during charge and discharge, and the capacity of the lithium-ion battery was easily attenuated. As shown in Fig. 3b, the capacity of the lithium-ion battery of Comparative Example 2 after undergoing charge and discharge cycles was attenuated more than that of Example 1, and the cycle capacity retention ratio $P_{200}$ after 200 cycles was relatively low.

Examples 2-8 and Comparative Examples 3-4

The negative electrode plates and lithium-ion batteries of Example (Ex.) 2 to Example (Ex.) 8 and Comparative Examples 3 to 4 were prepared by substantially the same method as in Example 1, except that the OI values of the first graphite and/or the second graphite used were shown in Table 2, respectively. The OI values of the first graphite layers and the second graphite layers in the negative electrode plates of Examples 2 to 8 and Comparative Example 3 to 4 measured according to the test method described above were also shown in Table 2.

By the test methods described above, the rebound rates of the negative electrode plates at different stages in Examples 2 to 8 and Comparative Examples 3 to 4, the cycle expansion forces after 200 cycles and the corresponding growth rates of expansion force, and the cycle capacity retention ratios $P_{200}$ and the rate capacity retention ratios $Q_1$ and $Q_2$ of the lithium-ion batteries in Examples 2 to 8 and Comparative Examples 3 to 4 were measured, respectively, and the results were shown in Table 2.

For the lithium-ion batteries prepared in Example 2 and Comparative Examples 3 to 4, a graph showing the cycle capacity retention ratios as a function of the number of cycles was shown in Fig. 4a. In addition, a bar graph showing the rate capacity retention ratios of the lithium-ion batteries in Example 2 and Comparative Examples 3 to 4 was shown in Fig. 4b.

Table 2

| | Ex. 2 | Ex. 3 | Ex. 4 | Ex. 5 | Ex. 6 | Ex. 7 | Ex. 8 | Comparative Example 3 | Comparative Example 4 |
|---|---|---|---|---|---|---|---|---|---|
| OI value of first graphite | 3.0 | 5.0 | 5.0 | 5.0 | 3.0 | 7.0 | 8.0 | 3.0 | 2.6 |
| OI value of second graphite | 1.5 | 0.5 | 0.4 | 1.5 | 1.0 | 1.0 | 1.0 | 2.6 | 2.6 |
| OI value of first graphite layer | 20.0 | 35.0 | 35.0 | 35.0 | 20.0 | 50.0 | 55.0 | 20.0 | 17.0 |
| OI value of second graphite layer | 15.0 | 15.0 | 4.0 | 5.0 | 10.0 | 10.0 | 10.0 | 17.0 | 17.0 |
| Rebound rate — Winding | 4.1% | 4.8% | 4.3% | 4.4% | 4.0% | 5.2% | 5.4% | 4.0% | 3.7% |
| Rebound rate — Chemical formation Full charging | 14.5% | 15.8% | 14.9% | 15.2% | 14.8% | 16.3% | 17.0% | 15.0% | 14.2% |
| Rebound rate — 100 cycles | 17.5% | 19.3% | 17.6% | 17.9% | 17.2% | 19.7% | 20.4% | 17.8% | 17.0% |
| Rebound rate — 200 cycles | 23.4% | 23.9% | 23.6% | 23.8% | 22.4% | 24.8% | 25.3% | 22.5% | 21.8% |
| Growth rate of expansion force | 163% | 175% | 169% | 172% | 153% | 185% | 196% | 148% | 134% |
| Cycle capacity retention ratio $P_{200}$ | 89.1% | 92.6% | 91.1% | 91.3% | 88.6% | 91.7% | 91.9% | 86.5% | 85.3% |
| Rate capacity retention ratio $Q_1$ | 87.4% | 87.1% | 88.9% | 88.6% | 89.3% | 84.2% | 84.0% | 79.7% | 80.0% |
| Rate capacity retention ratio $Q_2$ | 78.3% | 78.5% | 79.4% | 79.3% | 80.3% | 76.3% | 76.0% | 69.8% | 70.3% |

As can be seen from the results of Tables 1 and 2, in Examples 1 to 8, the lithium titanate layers included in the active material layers can effectively suppress the rebound of the negative electrode plates. Meanwhile, since the OI value of the first graphite layer disposed on the surface of the current collector is greater than or equal to 20.0, this means that a higher proportion of (004) crystal plane parallel to the graphite flake structure is exposed in the first graphite layer, which is conducive to the flow of electrons on the graphite surface and the transmission of electrons through the current collector, and the electron conductivity of the negative electrode plate is greatly increased, thus fully ensuring the rate performance of the lithium-ion battery. In addition, since the OI value of the second graphite layer is less than 15.0, this means that a higher proportion of (110) crystal plane perpendicular to the graphite flake structure is exposed in the second graphite layer, which is conducive to the intercalation and de-intercalation of lithium ions in graphite, and the lithium ion conduction rate of the negative electrode plate is greatly increased. Moreover, a higher proportion of the exposed (110) crystal plane in contact with the electrolytic solution can also result in a denser and more stable SEI film formed on the interface, thereby delaying the consumption of active lithium ions during the charging and discharging process of the battery and significantly reducing the capacity attenuation of the battery. In Examples 1 to 8, the cycle capacity retention ratios $P_{200}$ after 200 cycles of the lithium-ion batteries reached 88.6% or higher, and the rate capacity retention ratios $Q_1$ and $Q_2$ were 84.0% or higher and 76.0% or higher, respectively.

In Comparative Example 3 and Comparative Example 4, the OI values of the second graphite layers were relatively large and were outside the scope of the present application, which means that the proportion of the exposed (110) crystal planes in the second graphite layer decreased, while the proportion of (004) crystal planes increased, which is not conducive to intercalation and de-intercalation of lithium ions, and the density of the SEI film formed in contact with the electrolyte decreases. As a result, as shown in Fig. 4a, the capacities of the lithium-ion batteries of Comparative Example 3 and Comparative Example 4 after undergoing charge and discharge cycles were attenuated more than that of Example 2, and the cycle capacity retention ratios $P_{200}$ after 200 cycles were significantly lower than that of Example 2. In addition, as shown in Fig. 4b, compared with that of Example 2, the rate capacity retention ratios $Q_1$ and $Q_2$ of the lithium-ion batteries of Comparative Example 3 and Comparative Example 4 were both significantly reduced under the conditions of 1 C and 2 C.

Examples 9-10

The negative electrode plates and lithium-ion batteries of Examples 9 to 10 were prepared by substantially the same method as in Example 1, except that the OI values of the first graphite and/or the second graphite used were shown in Table 3, respectively. The OI values of the first graphite layers and the second graphite layers in the negative electrode plates of Examples 9 to 10 measured according to the test method described above were also shown in Table 3.

Table 3

|  | | Example 9 | Example 10 |
|---|---|---|---|
| OI value of first graphite | | 5.0 | 5.0 |
| OI value of second graphite | | 0.8 | 1.2 |
| OI value of first graphite layer | | 35.0 | 35.0 |
| OI value of second graphite layer | | 8.0 | 12.0 |
| Rebound rate | Winding | 4.0% | 4.7% |
| | Chemical formation and full charging | 14.1% | 15.0% |
| | 100 cycles | 17.3% | 18.5% |
| | 200 cycles | 22.4% | 23.6% |
| Growth rate of expansion force | | 146% | 164% |
| Cycle capacity retention ratio $P_{200}$ | | 91.9% | 92.8% |
| Rate capacity retention ratio $Q_1$ | | 89.7% | 87.8% |
| Rate capacity retention ratio $Q_2$ | | 80.6% | 78.4% |

By the test methods described above, the rebound rates of the negative electrode plates at different stages in Examples 9 to 10, the growth rates of expansion force after 200 cycles in Examples 9 to 10 and the cycle capacity retention ratios $P_{200}$ and the rate capacity retention ratios $Q_1$ and $Q_2$ of the lithium-ion batteries in Examples 9 to 10 were measured, respectively, and the results were shown in Table 3.

In Examples 9 to 10, the OI values of the second graphite layers were within the optional range of from 8 to 12 in the present application. As can be seen from the results of Table 2 and Table 3, when the OI values of the second graphite layers were within the optional range described above, the improvements of cycle performance and rate performance of the lithium-ion batteries can be better balanced compared with Examples 3 to 5.

Examples 11-12

The negative electrode plates and lithium-ion batteries of Examples 11 to 12 were prepared by substantially the same method as in Example 1, except that during the preparation of the negative electrode plates, the coating amounts of the slurries were adjusted so that the thicknesses of the first graphite layer, the lithium titanate layer, and the second graphite layer in the negative electrode plates of Examples 11 to 12 after the cold-pressing step were shown in Table 4, respectively.

Table 4

| | | | Example 11 | Example 12 | Example 13 | Example 14 |
|---|---|---|---|---|---|---|
| Thickness ($\mu$m) of first graphite layer | | | 30 | 30 | 30 | 30 |
| Thickness ($\mu$m) of lithium titanate layer | | | 20 | 60 | 40 | 40 |
| Thickness ($\mu$m) of second graphite layer | | | 30 | 30 | 30 | 30 |
| Compacted density (g/cm$^3$) of electrode plate | | | 1.6 | 1.6 | 0.9 | 1.9 |
| Rebou nd rate | Winding | | 4.8% | 3% | 2.5% | 5.7% |
| | Chemical formation and full charging | | 15.6% | 13.1% | 12.0% | 16.9% |
| | 100 cycles | | 19.3% | 15% | 16.5% | 19.8% |
| | 200 cycles | | 24.7% | 19.5% | 20.2% | 25.6% |
| Growth rate of expansion force | | | 183% | 92% | 123% | 197% |
| Cycle capacity retention ratio $P_{200}$ | | | 91.4% | 92.6% | 90.5% | 87.6% |
| Rate capacity retention ratio $Q_1$ | | | 88.9% | 85.3% | 85.2% | 83.6% |
| Rate capacity retention ratio $Q_2$ | | | 79.4% | 75.2% | 75.3% | 73.4% |

By the test methods described above, the rebound rates of the negative electrode plates at different stages in Examples 11 to 12, the growth rates of expansion force after 200 cycles in Examples 11 to 12 and the cycle capacity retention ratios $P_{200}$ and the rate capacity retention ratios $Q_1$ and $Q_2$ of the lithium-ion batteries in Examples 9 to 10 were measured, respectively, and the results were shown in Table 4.

As can be seen from the results of Tables 1 and 4, compared with Examples 11 and 12, the thickness of the lithium titanate layer in Example 1 is within the optional range of from 25 $\mu$m to 50 $\mu$m in the present application, and the cycle performance and rate performance of the lithium ion battery can be maintained, meanwhile ensuring that the lithium titanate layer fully exerts the effect of suppressing the rebound of the negative electrode plate.

Examples 13-14

The negative electrode plates and lithium-ion batteries of Examples 13 to 14 were prepared by substantially the same method as in Example 1, except that during the preparation of the negative electrode plates, the coating amounts of the slurries were adjusted so that the compacted densities of the negative electrode plates of Examples 13 to 14 were as shown in Table 4, respectively.

By the test methods described above, the rebound rates of the negative electrode plates at different stages in Examples 13 to 14, the growth rates of expansion force after 200 cycles in Examples 13 to 14 and the cycle capacity retention ratios $P_{200}$ and the rate capacity retention ratios $Q_1$ and $Q_2$ of the lithium-ion batteries in Examples 13 to 14 were measured, respectively, and the results were shown in Table 4.

In Examples 1 and 13, the compacted densities of the negative electrode plates are in the optional range of from 0.9 to 1.8 g/cm$^3$ in the present application. From the results of Tables 1 and 4, it can be seen that the electrolyte wettability of the negative electrode plates is sufficiently ensured as compared with Example 14, thereby further ensuring the rate performance of the batteries. In addition, the compacted densities of the negative electrode plate are within the above-described limited ranges of the present application, and the rebound of the negative electrode plates during the manufacturing process and the charge and discharge cycle of the lithium-ion batteries can be further reduced.

It should be noted that the present application is not limited to the above-mentioned embodiments. The above-mentioned embodiments are merely examples, and within the scope of the technical solutions of the present application, embodiments that have substantially the same configuration as the technical idea and exert the same effects are included in the technical scope of the present application. In addition, without departing from the scope of the present application, various modifications conceivable by those skilled in the art can be introduced to the embodiments, and other forms constructed by combining some components in the embodiments are also included in the scope of the present application.

**Claims**

1.  A negative electrode plate, comprises a current collector and an active material layer disposed on at least one surface of the current collector, wherein
    the active material layer comprises:

    a first graphite layer;
    a lithium titanate layer; and
    a second graphite layer,
    the first graphite layer is disposed on at least one surface of the current collector, the lithium titanate layer is disposed on a surface of the first graphite layer, and the second graphite layer is disposed on a surface of the lithium titanate layer, and
    the first graphite layer has an OI value of greater than or equal to 20.0, optionally from 30.0 to 40.0, and the second graphite layer has an OI value of less than or equal to 15.0, optionally from 8.0 to 12.0.

2.  The negative electrode plate according to claim 1, wherein the first graphite layer has a thickness of less than or equal to 100 $\mu$m.

3.  The negative electrode plate according to claim 1 or 2, wherein the lithium titanate layer has a thickness of from 25 $\mu$m to 50 $\mu$m.

4.  The negative electrode plate according to any one of claims 1 to 3, wherein the second graphite layer has a thickness of less than or equal to 100 $\mu$m.

5.  The negative electrode plate according to any one of claims 1 to 4, wherein the active material layer has a thickness of from 50 $\mu$m to 150 $\mu$m.

6.  The negative electrode plate according to any one of claims 1 to 5, wherein the negative electrode plate has a compacted density of from 0.9 to 1.8 g/cm$^3$.

7.  A method for preparing a negative electrode plate, comprising

    providing a current collector;
    forming a first graphite layer comprising first graphite on at least one surface of the current collector;
    forming a lithium titanate layer comprising lithium titanate on a surface of the first graphite layer;
    forming a second graphite layer comprising second graphite on a surface of the lithium titanate layer, to obtain a laminated body having an active material layer on at least one surface of the current collector, the active material layer comprising the first graphite layer, the lithium titanate layer, and the second graphite layer; and
    cold-pressing the laminated body to obtain the negative electrode plate;
    wherein the first graphite has an OI value of greater than 2.0 and less than or equal to 6.0, optionally from 3.0 to 5.0, and the second graphite has an OI value of greater than or equal to 0.5 and less than 2.0, and optionally from 1.0 to 1.5.

8.  The method according to claim 7, wherein a pressure for the cold-pressing is from 15 T to 70 T.

9.  The method according to claim 7 or 8, wherein after cold-pressing the laminated body, the first graphite layer as formed has an OI value of greater than or equal to 20.0, optionally from 30.0 to 40.0, and the second graphite layer as formed has an OI value of less than or equal to 15.0, optionally from 8.0 to 12.0.

10. The method according to any one of claims 7 to 9, wherein after cold-pressing the laminated body, the negative electrode plate as formed has a compacted density of from 0.9 to 1.8 g/cm$^3$.

11. A secondary battery, comprising

    a positive electrode plate;
    the negative electrode plate according to any one of claims 1 to 6, or a negative electrode plate prepared by the method according to any one of claims 7 to 10.
    an electrolyte; and
    a separator.

12. A battery module comprising the secondary battery according to claim 11.

13. A battery pack comprising the battery module according to claim 12.

14. An electrical device comprising the secondary battery according to claim 11, the battery module according to claim 12 or the battery pack according to claim 13.

<u>6</u>

64
63
60
62
61

Fig. 1

Rebound rate 反弹率

30%

25% —— Example 范例1

Control    Example

20% Control    Example

Comparative 例1
15% Example 1
Comparative 例2
10% Example 2

5%

0%
Cold-pressing 压 Winding 卷 Chemical 卷Full charging 圈Full charging 圈满充
formation    100 cycles    200 cycles
and    full
charging
Fig. 2

Expansion force (kgf) 膨胀力(kgf)

900

600 —— Example 范例1

Control    Example

Control    Example

300 Comparative    Example

Comparative    Example

0
0        50        100        150        200        250
Number of cycles 圈数

Fig. 3a

Fig. 3b

Fig. 4a

Fig. 4b

**5**

Fig. 5

5

Fig. 6

**4**

Fig. 7

Fig. 8

Fig. 9

Fig. 10

<table>
<tr><td colspan="2">**INTERNATIONAL SEARCH REPO**</td><td>International application No.<br>**PCT/CN2023/082058**</td></tr>
</table>

**A.    CLASSIFICATION OF SUBJECT MATTER**

H01M4/133(2010.01)i;  H01M4/1393(2010.01)i;  H01M10/0525(2010.01)i

According to International Patent Classification (IPC) or to both national classification and IPC

**B.    FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 电池, 负极, 阳极, 石墨, OI, 钛酸锂, 层, battery, cell, negative, anode, graphite, lithium, titanate, Li4Ti5O12, layer, film

**C.    DOCUMENTS CONSIDERED TO BE RELEVANT**

| Category* | Citation of document, with indication, where appropriate, of the relevant passages | Relevant to claim No. |
|---|---|---|
| Y | CN 113036298 A (NINGDE CONTEMPORARY AMPEREX TECHNOLOGY CO., LTD.) 25 June 2021 (2021-06-25)<br>    description, paragraphs 0004-0086 | 1-14 |
| Y | CN 112151757 A (ZHEJIANG FUNLITHIUM NEW ENERGY TECHNOLOGY CO., LTD.) 29 December 2020 (2020-12-29)<br>    description, paragraphs 0003-0026 | 1-14 |
| A | CN 112670445 A (YINLONG ENERGY CO., LTD.) 16 April 2021 (2021-04-16)<br>    entire document | 1-14 |
| A | CN 107482166 A (SHENZHEN BAK POWER BATTERY CO., LTD.) 15 December 2017 (2017-12-15)<br>    entire document | 1-14 |
| A | CN 112103486 A (ZHUHAI GUANYU POWER BATTERY CO., LTD.) 18 December 2020 (2020-12-18)<br>    entire document | 1-14 |
| A | US 2012009472 A1 (SANYO ELECTRIC CO., LTD.) 12 January 2012 (2012-01-12)<br>    entire document | 1-14 |

☐ Further documents are listed in the continuation of Box C.          ☑ See patent family annex.

| | |
|---|---|
| *    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **06 June 2023** | **12 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPO**
**Information on patent family member:**

| International application No. |
| --- |
| **PCT/CN2023/082058** |

| Patent document cited in search report | | | Publication date (day/month/year) | Patent family member(s) | | | Publication date (day/month/year) |
| --- | --- | --- | --- | --- | --- | --- | --- |
| CN | 113036298 | A | 25 June 2021 | None | | | |
| CN | 112151757 | A | 29 December 2020 | None | | | |
| CN | 112670445 | A | 16 April 2021 | None | | | |
| CN | 107482166 | A | 15 December 2017 | None | | | |
| CN | 112103486 | A | 18 December 2020 | None | | | |
| US | 2012009472 | A1 | 12 January 2012 | JP | 2012022794 | A | 02 February 2012 |
| | | | | CN | 102332559 | A | 25 January 2012 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210414297